# EUROPÄISCHE PATENTANMELDUNG

(11) **EP 3 323 563 A1**
(43) Veröffentlichungstag der Anmeldung: **23.05.2018**
(21) Anmeldenummer: 16199461.1
(22) Anmeldetag: 18.11.2016
(51) Int. Cl.: B25C 1/06

(54) **SCHWUNGRADANGETRIEBENES SETZGERÄT**

(71) Anmelder: HILTI Aktiengesellschaft, 9494 Schaan (LI)
(72) Erfinder: Dittrich, Tilo, 6800 Feldkirch (AT); Thon, Raphael, 6800 Feldkirch (AT); Schmidt, Dominik, 9470 Buchs (CH)
(74) Vertreter: Hilti Aktiengesellschaft Corporate Intellectual Property

(57) **Zusammenfassung**

Die Erfindung betrifft ein schwungradangetriebenes Setzgerät (1) zum Eintreiben von Befestigungselementen (14) in einen Untergrund, mit mindestens einem Schwungrad (9), das direkt durch einen Elektromotor (8) angetrieben ist.

Um ein schwungradangetriebenes Setzgerät zu schaffen, das einen guten Wirkungsgrad und eine lange Lebensdauer aufweist, ist der Elektromotor (8) als Scheibenläufermotor (40) mit mindestens einem Scheibenrotor ausgeführt.

## Beschreibung

### Technisches Gebiet

Die Erfindung betrifft ein schwungradangetriebenes Setzgerät zum Eintreiben von Befestigungselementen in einen Untergrund, mit mindestens einem Schwungrad, das direkt durch einen Elektromotor angetrieben ist.

### Stand der Technik

Aus der deutschen Offenlegungsschrift DE 10 2005 000 077 A1 ist ein elektrisch betriebenes Eintreibgerät für Befestigungselemente bekannt, mit einer Antriebsordnung für einen in einer Führung versetzbar gelagerten Eintreibstößel, die wenigstens ein über einen Elektromotor in Rotation versetzbares Antriebsschwungrad aufweist, und mit einer Rückstelleinrichtung, über die der Eintreibstößel in eine Ausgangsstellung überführbar ist. Aus der europäischen Patentschrift EP 2 127 819 B1 ist ein Befestigungsmittel-Eintreibwerkzeug bekannt, eingerichtet zum Eintreiben von Befestigungsmitteln in ein Werkstück, umfassend mindestens einen Elektromotor mit einem mittleren Stator und einem äußeren Rotor, der eingerichtet ist, um sich um den Stator herum zu drehen, wobei mindestens ein Teil des Rotors das Schwungrad umfasst.

### Darstellung der Erfindung

Aufgabe der Erfindung ist es, ein schwungradangetriebenes Setzgerät zum Eintreiben von Befestigungselementen in einen Untergrund, mit mindestens einem Schwungrad, das direkt durch einen Elektromotor angetrieben ist, zu schaffen, das einen guten Wirkungsgrad und eine lange Lebensdauer aufweist.

Die Aufgabe ist bei einem schwungradangetriebenen Setzgerät zum Eintreiben von Befestigungselementen in einen Untergrund, mit mindestens einem Schwungrad, das direkt durch einen Elektromotor angetrieben ist, dadurch gelöst, dass der Elektromotor als Scheibenläufermotor mit mindestens einem Scheibenrotor ausgeführt ist. Bei dem schwungradangetriebenen Setzgerät handelt es sich vorzugsweise um ein handgeführtes Setzgerät, das auch als Setzwerkzeug bezeichnet wird. Bei den Befestigungselementen handelt es sich zum Beispiel um Nägel oder Bolzen, die mit Hilfe des Setzgeräts, das auch als Setzwerkzeug bezeichnet wird, in den Untergrund eingetrieben werden. Die Setzenergie wird vorteilhaft über den Elektromotor bereitgestellt und über das Schwungrad auf ein Eintreibelement, das auch als Setzkolben bezeichnet wird, übertragen. Zu diesem Zweck wird das Schwungrad durch den Elektromotor in Rotation versetzt. Die Rotationsenergie des Schwungrads wird für einen Setzvorgang auf das Eintreibelement, insbesondere den Setzkolben, der verkürzt auch als Kolben bezeichnet wird, übertragen. Mit Hilfe des Eintreibelements, insbesondere des Kolbens, wird das Befestigungselement in den Untergrund eingetrieben. Zum Übertragen der Rotationsenergie von dem Schwungrad auf das Eintreibelement wird das Schwungrad, zum Beispiel mit Hilfe einer geeigneten Kupplungseinrichtung, reibschlüssig mit dem Eintreibelement verbunden. Zu diesem Zweck kann das Eintreibelement zwischen dem Schwungrad und einer Gegenrolle angeordnet sein. Nach einem Setzvorgang wird durch Öffnen der Kupplungseinrichtung das Eintreibelement von dem Schwungrad gelöst. Das Eintreibelement kann dann durch eine geeignete Rückstelleinrichtung, zum Beispiel eine Federeinrichtung, in seine Ausgangslage zurückgestellt werden. Durch die Ausführung des Elektromotors als Scheibenläufermotor kann der Bauraum für den Schwungradantrieb vorteilhaft sehr klein gestaltet werden. Dieser relativ kleine Schwungradantrieb kann leicht in ein handgeführtes Setzgerät integriert werden. Der Direktantrieb des Scheibenrotors durch den Elektromotor hat den Vorteil, dass unerwünschte Wirkungsgradverluste vermieden werden. Der Scheibenrotor des Scheibenläufermotors kann im Betrieb des Setzgeräts auf einfache Art und Weise effektiv gekühlt werden. Der Scheibenläufermotor ist nach dem Einschalten des Setzgeräts schnell einsatzbereit und kann mit dem Scheibenrotor hohe Drehmomente übertragen. Dadurch wird auf einfache Art und Weise eine Beschleunigung des Scheibenrotors aus dem Stillstand ermöglicht. Das liefert den Vorteil, dass das schwungradangetriebene Setzgerät mit dem Scheibenläufermotor schnell betriebsbereit ist.

Ein bevorzugtes Ausführungsbeispiel des schwungradangetriebenen Setzgeräts ist dadurch gekennzeichnet, dass der Scheibenrotor als Schwungrad ausgeführt ist. Dadurch werden die Herstellung und die Montage des Setzgeräts erheblich vereinfacht. Die Masse des Scheibenrotors wird vorteilhaft als Schwungmasse im Betrieb des Setzgeräts genutzt.

Ein weiteres bevorzugtes Ausführungsbeispiel des schwungradangetriebenen Setzgeräts ist dadurch gekennzeichnet, dass der Scheibenrotor mit Permanentmagneten versehen ist, die mit Statorwicklungen zusammenwirken. Die Spulenwicklungen sind vorteilhaft in radialer Richtung relativ weit außen angeordnet. Das liefert den Vorteil, dass die im Betrieb der in den Spulenwicklungen auftretenden Wärme direkt an die Umgebung abgegeben werden kann und sich nicht im Inneren des Elektromotors staut. Dadurch kann die Schwungradmasse auf einfache Art und Weise effektiv erhöht werden.

Ein weiteres bevorzugtes Ausführungsbeispiel des schwungradangetriebenen Setzgeräts ist dadurch gekennzeichnet, dass der Scheibenrotor unter Ausbildung mindestens eines Ringhohlraums mit einer Rotorwelle verbunden ist. Der Ringhohlraum wird zum Beispiel durch Stege und/oder speichenartige Verbindungen zwischen dem Schwungrad und der Rotorwelle dargestellt. Die Rotorwelle dient dazu, den Scheibenrotor relativ zu einem feststehenden Stator des als Scheibenläufermotor ausgeführten Elektromotors drehbar zu lagern. Durch den Ringhohlraum kann ein großer Teil der Schwungradmasse vorteilhaft in radial außen liegende Bereiche des Scheibenrotors verlagert werden. Dadurch wird der Wirkungsgrad des Schwungrads verbessert. Darüber hinaus kann das Gewicht des Schwungrads im Vergleich zu einem Scheibenrotor ohne Ringhohlraum reduziert werden. Dadurch wiederum kann das Gesamtgewicht des schwungradangetriebenen Setzgeräts vorteilhaft reduziert werden.

Ein weiteres bevorzugtes Ausführungsbeispiel des schwungradangetriebenen Setzgeräts ist dadurch gekennzeichnet, dass der Scheibenrotor zwischen zwei symmetrisch angeordneten Statoreinrichtungen drehbar ist. Die beiden Statoreinrichtungen stellen einen Scheibenläufermotor mit einem Doppelstator dar. Die Statoreinrichtungen haben vorteilhaft im Wesentlichen die Gestalt von Scheiben wie der Scheibenrotor. Allerdings stehen die Statoreinrichtungen im Vergleich zum Scheibenrotor fest. Die die Statoreinrichtungen darstellenden Scheiben haben vorzugsweise eine geringere Dicke als der Scheibenrotor. Als Dicke wird die Ausdehnung der Statoreinrichtungen in axialer Richtung bezeichnet. Der Begriff axial bezieht sich auf die Drehachse des Scheibenrotors. Der symmetrische Aufbau der Statoreinrichtungen liefert den Vorteil, dass auf den Scheibenrotor im Betrieb keine Axialkräfte ausgeübt werden.

Ein weiteres bevorzugtes Ausführungsbeispiel des schwungradangetriebenen Setzgeräts ist dadurch gekennzeichnet, dass eine Statoreinrichtung zwischen zwei jeweils als Schwungrad ausgeführten und symmetrisch angeordneten Scheibenrotoren feststeht. Die beiden Scheibenrotoren stellen einen Scheibenläufermotor mit einem Doppelrotor dar. An den Scheibenrotoren sind vorteilhaft Permanentmagnete angebracht. Die Scheibenrotoren können, ebenso wie der vorab beschriebene einzelne Scheibenrotor, glockenförmige Ausbuchtungen aufweisen, die dazu dienen, die Permanentmagnete in radialer Richtung relativ zu dem jeweiligen Scheibenrotor zu fixieren. Dadurch wird auf einfache Art und Weise ein unerwünschtes Lösen der Permanentmagnete bei Rotation des Scheibenrotors vermieden. Trotz der innenliegenden Statoreinrichtung kann durch einen verhältnismäßig großen Luftspalt zwischen dem Scheibenrotor und den Statoreinrichtungen eine ausreichende Kühlung des Scheibenläufermotors sichergestellt werden.

Ein weiteres bevorzugtes Ausführungsbeispiel des schwungradangetriebenen Setzgeräts ist dadurch gekennzeichnet, dass der Scheibenrotor/die Scheibenrotoren Spulenwicklungen umfasst/umfassen, die mit Permanentmagneten der Statoreinrichtung/Statoreinrichtungen zusammenwirken. Dadurch wird eine Ausführung des Scheibenläufermotors als Gleichstrommotor mit Permanentmagneten ermöglicht.

Ein weiteres bevorzugtes Ausführungsbeispiel des schwungradangetriebenen Setzgeräts ist dadurch gekennzeichnet, dass der Scheibenrotor/die Scheibenrotoren und die Statoreinrichtung/Statoreinrichtungen Spulenwicklungen umfassen. Dadurch wird eine Ausführung des Scheibenläufermotors als insbesondere doppelter Reihenschlussmotor ermöglicht. Das magnetische Feld wird vorteilhaft über die Spulenwicklungen aufgebaut.

Ein weiteres bevorzugtes Ausführungsbeispiel des schwungradangetriebenen Setzgeräts ist dadurch gekennzeichnet, dass eine beziehungsweise die Rotorwelle in axialer Richtung außerhalb der Statoreinrichtung/Statoreinrichtungen und des Scheibenrotors/der Scheibenrotoren gelagert ist. Die Rotorwelle ist zum Beispiel in einer feststehenden Tragstruktur des Setzgeräts mit Hilfe von geeigneten Lagereinrichtungen drehbar gelagert.

Ein weiteres bevorzugtes Ausführungsbeispiel des schwungradangetriebenen Setzgeräts ist dadurch gekennzeichnet, dass der Scheibenläufermotor Hallsensoren zur Erfassung einer Schwungradposition und/oder einer Schwungraddrehzahl umfasst. Über die mit den Hallsensoren erfassten Informationen können einzelne Statorwicklungen in Abhängigkeit von einer Rotorstellung des Scheibenrotors beziehungsweise der Scheibenrotoren elektronisch angesteuert werden, um den Scheibenläufermotor anzutreiben.

Die Erfindung betrifft gegebenenfalls auch ein Verfahren zum Betreiben eines vorab beschriebenen schwungradangetriebenen Setzgeräts.

Die Erfindung betrifft gegebenenfalls auch einen Scheibenrotor und/oder eine Statoreinrichtung für ein vorab beschriebenes Setzgerät. Die genannten Teile sind separat handelbar.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
Figur 1 eine vereinfachte Darstellung eines schwungradangetriebenen Setzgeräts mit einem Schwungrad, das direkt durch einen als Scheibenläufermotor ausgeführten Elektromotors angetrieben wird;
Figur 2 eine vereinfachte Darstellung eines Ausführungsbeispiels des Schwungradantriebs mit einem Scheibenläufermotor, der einen Scheibenrotor umfasst, der zwischen zwei Statoreinrichtungen drehbar ist, im Längsschnitt, und
Figur 3 einen Schwungradantrieb mit einem Scheibenläufermotor gemäß einem zweiten Ausführungsbeispiel mit einer Statoreinrichtung, die zwischen zwei Scheibenrotoren angeordnet ist, ebenfalls im Längsschnitt.

### Ausführungsbeispiele

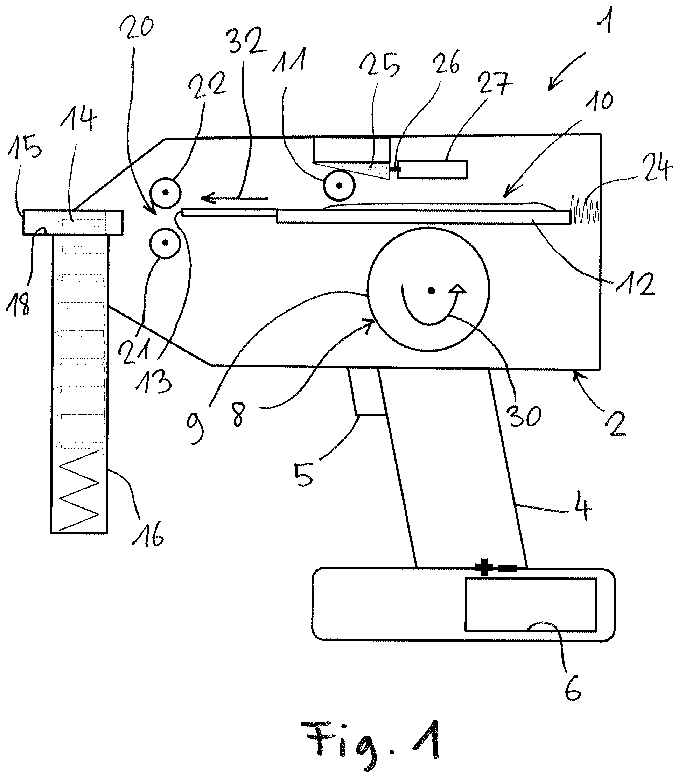

In Figur 1 ist ein schwungradangetriebenes Setzgerät 1 mit einem Gehäuse 2 vereinfacht dargestellt. Das Gehäuse 2 weist einen Handgriff 4 mit einem Trigger 5 auf. Daher wird das Setzgerät 1 auch als handgeführtes Setzgerät oder Setzwerkzeug bezeichnet.

In ein in Figur 1 unteres freies Ende des Handgriffs 4 des Setzgeräts 1 ist ein Akkumulator 6 zum Speichern von elektrischer Energie integriert. Die elektrische Energie des Akkumulators 6 dient zum Antreiben eines Elektromotors 8, der als Scheibenläufermotor ausgeführt ist. Mit dem Scheibenläufermotor 8 wird direkt ein Schwungrad 9 angetrieben. Das Schwungrad 9 ist vorteilhaft als Scheibenrotor des Scheibenläufermotors 8 ausgeführt. Über den Scheibenläufermotor 8 kann das Schwungrad 9 schnell und mit einem hohen Drehmoment in Rotation versetzt werden.

Das Setzgerät 1 umfasst des Weiteren ein Eintreibelement 10 mit einem Setzkolben 12, der verkürzt auch als Kolben bezeichnet wird. Das Eintreibelement 10 beziehungsweise der Setzkolben 12 ist zwischen dem Schwungrad 9 und einer Gegenrolle 11 angeordnet. Die Gegenrolle 11 kann mit dem Schwungrad 9 und dem dazwischen angeordneten Eintreibelement 10, anders als dargestellt, auch als Schrägradkupplung ausgeführt sein.

Der Setzkolben 12 weist an seinem in Figur 1 linken Ende eine Kolbenspitze 13 auf, mit der ein Befestigungselement 14 am Setzende 15 des Setzgeräts 1 in einen (nicht dargestellten) Untergrund eintreibbar ist. Bei den Befestigungselementen 14 handelt es sich zum Beispiel um Bolzen oder Nägel, die über ein Magazin 16 am Setzende 15 des Setzgeräts 1 vorzugsweise automatisch bereitgestellt werden. Da in Figur 1 oben in dem Magazin 16 angeordnete Befestigungselement 14 ist in einer Bolzenführung 18 geführt.

Der Setzkolben 12 beziehungsweise das Eintreibelement 10 ist in dem Setzgerät 1 mit Hilfe mindestens einer Kolbenführung 20 in axialer Richtung, also in Figur 1 nach links und nach rechts, hin und her bewegbar geführt. Die Kolbenführung 20 umfasst zwei Führungsrollen 21, 22. Zum Eintreiben des Befestigungselements wird der Setzkolben 12 mit seiner Kolbenspitze 13 mit großer Beschleunigung durch die Kolbenführung 20 auf das Befestigungselement 14 zu bewegt. Nach einem Setzvorgang wird der Setzkolben 12 mit Hilfe einer Rückstellfeder 24 wieder zurück in seine in Figur 1 dargestellte Ausgangslage bewegt.

Das Setzgerät 1 umfasst des Weiteren einen Keil 25, der mit einem Stößel 26 durch einen Elektromagneten 27 bewegbar ist, um die Gegenrolle 11 in Figur 1 nach unten gegen das Eintreibelement 10 zu drücken. Dadurch wird eine Art Kupplung dargestellt, die dazu dient, das Eintreibelement 10 reibschlüssig mit dem Schwungrad 9 zu verbinden.

Sobald der Reibschluss hergestellt ist, wird eine Drehbewegung des Schwungrads 9, die in Figur 1 durch einen Pfeil 30 angedeutet ist, auf das Eintreibelement 10 übertragen, so dass dieses in einer ebenfalls durch einen Pfeil 32 angedeuteten Setzrichtung in Figur 1 nach links auf das Befestigungselement 14 in der Bolzenführung 18 zu bewegt wird. Sobald das Eintreibelement 10 mit der Kolbenspitze 13 auf das Befestigungselement 14 trifft, wird dieses am Setzende 15 des Setzgeräts 1 in den Untergrund eingetrieben.

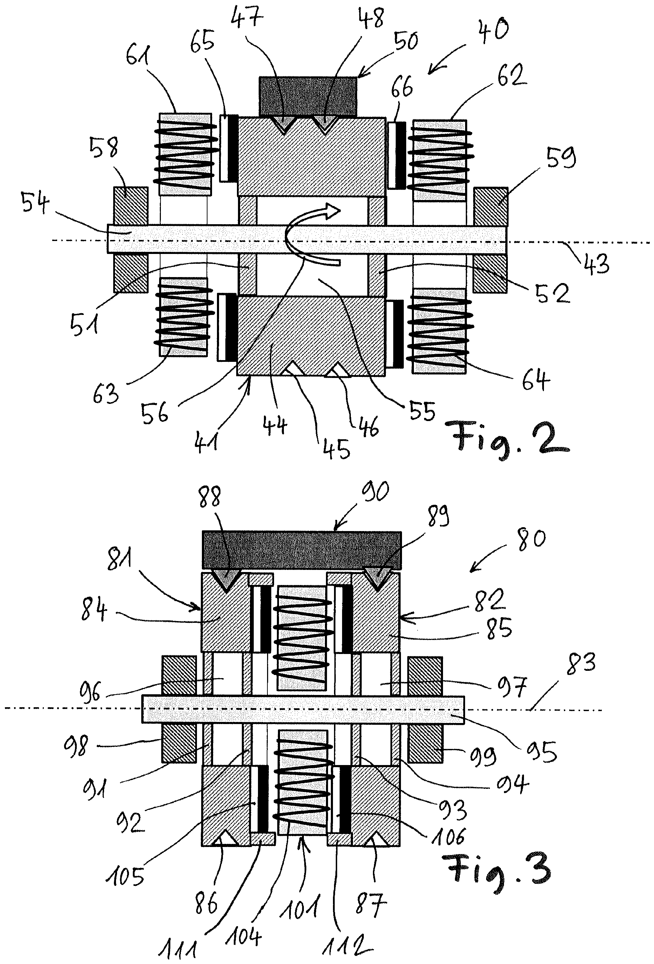

In den Figuren 2 und 3 sind zwei Ausführungsbeispiele von Scheibenläufermotoren 40; 80 dargestellt, die zeigen, wie der Elektromotor 8 zum Antreiben des Schwungrads 9 des Setzgeräts 1 in Figur 1 besonders vorteilhaft ausgeführt werden kann. Durch den Schwungradantrieb mit dem Scheibenläufermotor 40; 80 kann bei reduziertem Bauraum auf einfache Art und Weise eine ausreichend große Setzenergie bereitgestellt werden, die über das Schwungrad 9 auf das Eintreibelement 10 übertragen wird.

Der in Figur 2 dargestellte Scheibenläufermotor 40 umfasst einen Scheibenrotor 41, der das Schwungrad 9 in Figur 1 darstellt. Der Scheibenrotor 41 ist um eine Drehachse 43 drehbar. Zur Darstellung des Schwungrads umfasst der Scheibenrotor 41 einen Schwungradkörper 44. Der Schwungradkörper 44 weist radial außen zwei Ringnuten 45, 46 auf, in welche Keilrippen 47, 48 eingreifen. Die Keilrippen 47, 48 sind an einer Unterseite eines Eintreibelements 50 ausgebildet, das dem Eintreibelement 10 in Figur 1 entspricht. Durch die mit den Ringnuten 45, 46 in Eingriff bringbaren Keilrippen 47, 48 wird die Herstellung eines Reibschlusses zwischen dem Eintreibelement 50 und dem Schwungrad beziehungsweise dem Scheibenrotor 41 vereinfacht beziehungsweise verbessert.

Der Schwungradkörper 44 ist über beispielhaft dargestellte Stege 51, 52 drehfest mit einer Rotorwelle 54 verbunden. Dadurch wird auf vorteilhafte Art und Weise ein Ringhohlraum 55 dargestellt. Der Ringhohlraum 55 wird radial außen von dem Schwungradkörper 44 begrenzt. Radial innen wird der Ringhohlraum 55 von einer Rotorwelle 54 begrenzt. In axialen Richtungen wird der Ringhohlraum 55 von den Stegen 51, 52 begrenzt.

Durch einen Pfeil 56 ist eine Drehbewegung der Rotorwelle 54 zusammen mit dem Schwungradkörper 44 angedeutet. Die Rotorwelle 54 ist in axialer Richtung außen, also in Figur 2 links und rechts, durch Lagereinrichtungen 58, 59 drehbar gelagert. Die Lagereinrichtungen 58, 59 sind vorzugsweise gehäusefest in dem Setzgerät angeordnet.

Der Scheibenrotor 41 ist in axialer Richtung zwischen zwei Statoreinrichtungen 61, 62 angeordnet. Die Statoreinrichtungen 61, 62 sind symmetrisch angeordnet und ausgeführt. Zur Darstellung des Scheibenläufermotors 40 sind die feststehenden Statoreinrichtungen 61, 62 mit Spulenwicklungen 63, 64 versehen, die auch als Statorwicklungen bezeichnet werden. Die Spulenwicklungen 63, 64 wirken mit Permanentmagneten 65, 66 zusammen, die an dem Scheibenrotor 41 befestigt sind. Der Scheibenrotor 41 kann auch ganz oder teilweise aus den Permanentmagneten 65, 66 gebildet sein.

Der Scheibenmotorläufer 40 mit den beiden Statoreinrichtungen 61, 62 auf beiden Seiten des Scheibenrotors 41 liefert aufgrund seines symmetrischen Aufbaus den Vorteil, dass auf den Scheibenrotor 41 im betrieb keine Axialkräfte ausgeübt werden. Der Scheibenläufermotor 40 ist vorteilhaft mit Hallsensoren (nicht dargestellt) ausgestattet. Über die mit den Hallsensoren erfassten Signale können die Statorwicklungen 63, 64 einzeln angesteuert werden, um den Scheibenrotor 41 in Drehung zu versetzen.

Der in Figur 3 dargestellte Scheibenläufermotor 80 umfasst zwei Scheibenrotoren 81, 82, die gemeinsam um eine Drehachse 83 drehbar sind. Die Scheibenrotoren 81, 82 umfassen, wie der Scheibenrotor 41 in Figur 2, jeweils einen Schwungradkörper 84, 85.

Die Schwungradkörper 84, 85 weisen radial außen jeweils eine Ringnut 86, 87 auf. Zum Herstellen eines Reibschlusses greifen Keilrippen 88, 89 in die Ringnuten 86, 87 ein. Die Keilrippen 88, 89 sind an einer Unterseite eines Eintreibelements 90 ausgebildet, das dem Eintreibelement 10 in Figur 1 entspricht.

Zur Darstellung eines Ringhohlraums 96, 97 sind die Schwungradkörper 84, 85 über Stege 91, 92; 93, 94 drehfest mit einer gemeinsamen Rotorwelle 95 verbunden. Die Ringhohlräume 96, 97 haben in den Scheibenrotoren 81, 82 die gleiche Funktion wie der Ringhohlraum 55 des Scheibenrotors 41 in Figur 2.

Die Rotorwelle 95 ist mit Hilfe von gehäusefesten Lagereinrichtungen 98, 99 axial außerhalb der Scheibenrotoren 81, 82 drehbar gelagert. Eine Statoreinrichtung 101 ist in axialer Richtung feststehend zwischen den Scheibenrotoren 81, 82 angeordnet. Die Statoreinrichtung 101 ist mit Spulenwicklungen 104 ausgestattet, die auch als Statorwicklungen 104 bezeichnet werden. Die Spulenwicklungen 104 wirken mit Permanentmagneten 105, 106 zusammen, die an den Scheibenrotoren 81, 82 befestigt sind.

Die Scheibenrotoren 81, 82 sind zur Darstellung von glockenförmigen Ausbuchtungen zur Fixierung der Permanentmagneten 105, 106 radial außen mit umlaufenden Stegen 111, 112 ausgestattet. Die umlaufenden Stege 111, 112 sind fest mit den Schwungradkörpern 84, 85 verbunden und fixieren die Permanentmagnete 105, 106 radial außen.

Die beiden Scheibenrotoren 81, 82 des Scheibenläufermotors 80 stellen einen Doppelrotor mit innenliegendem Stator dar. Durch die beiden Scheibenrotoren 81, 82 ist das Schwungrad, das von innen dargestellt wird, zweigeteilt. Das Eintreibelement 90 greift mit den Keilrippen 88, 89 in beide Scheibenrotoren 81, 82 ein.

Die in Figur 3 dargestellte Bauweise bietet bei sehr hohen Beschleunigungen und Drehzahlen unter anderem den Vorteil, dass die Permanentmagnete 105, 106 der Scheibenrotoren 81, 82 trotz hoher Fliehkräfte stabil an beziehungsweise in den Schwungradkörpern 84, 85 gehalten werden.

## Patentansprüche

1. Schwungradangetriebenes Setzgerät (1) zum Eintreiben von Befestigungselementen (14) in einen Untergrund, mit mindestens einem Schwungrad (9), das direkt durch einen Elektromotor (8) angetrieben ist, **dadurch gekennzeichnet, dass** der Elektromotor (8) als Scheibenläufermotor (40;80) mit mindestens einem Scheibenrotor (41; 81,82) ausgeführt ist.

2. Schwungradangetriebenes Setzgerät nach Anspruch 1, **dadurch gekennzeichnet, dass** der Scheibenrotor (41;81,82) als Schwungrad ausgeführt ist.

3. Schwungradangetriebenes Setzgerät nach einem der vorhergehenden Ansprüche, **dadurch gekennzeichnet, dass** der Scheibenrotor (41;81,82) mit Permanentmagneten (65,66;105,106) versehen ist, die mit Statorwicklungen zusammenwirken.

4. Schwungradangetriebenes Setzgerät nach einem der vorhergehenden Ansprüche, **dadurch gekennzeichnet, dass** der Scheibenrotor (41;81,82) unter Ausbildung mindestens eines Ringhohlraums (55;96,97) mit einer Rotorwelle (54;95) verbunden ist.

5. Schwungradangetriebenes Setzgerät nach einem der vorhergehenden Ansprüche, **dadurch gekennzeichnet, dass** der Scheibenrotor (41) zwischen zwei symmetrisch angeordneten Statoreinrichtungen (61,62) drehbar ist.

6. Schwungradangetriebenes Setzgerät nach einem der Ansprüche 1 bis 4, **dadurch gekennzeichnet, dass** eine Statoreinrichtung (101) zwischen zwei jeweils als Schwungrad ausgeführten und symmetrisch angeordneten Scheibenroten (81,82) feststeht.

7. Schwungradangetriebenes Setzgerät nach Anspruch 5 oder 6, **dadurch gekennzeichnet, dass** der Scheibenrotor/die Scheibenrotoren Spulenwicklungen umfasst/umfassen, die mit Permanentmagneten der Statoreinrichtung/Statoreinrichtungen zusammenwirken.

8. Schwungradangetriebenes Setzgerät nach Anspruch 5 oder 6, **dadurch gekennzeichnet, dass** der Scheibenrotor/die Scheibenrotoren und die Statoreinrichtung/Statoreinrichtungen Spulenwicklungen umfassen.

9. Schwungradangetriebenes Setzgerät nach einem der vorhergehenden Ansprüche, **dadurch gekennzeichnet, dass** eine beziehungsweise die Rotorwelle (54;95) in axialer Richtung außerhalb der Statoreinrichtung (101)/Statoreinrichtungen (61,62) und des Scheibenrotors (41)/der Scheibenrotoren (81,82) gelagert ist.

10. Schwungradangetriebenes Setzgerät nach einem der vorhergehenden Ansprüche, **dadurch gekennzeichnet, dass** der Scheibenläufermotor (40;80) Hallsensoren zur Erfassung einer Schwungradposition und/oder einer Schwungraddrehzahl umfasst.
